(19) Europäisches Patentamt
European Patent Office
Office européen des brevets

(11) Veröffentlichungsnummer: **0 400 451 A1**

# (12) EUROPÄISCHE PATENTANMELDUNG

(21) Anmeldenummer: **90109648.7**

(22) Anmeldetag: **21.05.90**

(51) Int. Cl.[5]: **C09B 29/042, C09B 29/36, C09B 29/42, D06P 1/04**

(30) Priorität: **30.05.89 DE 3917455**

(43) Veröffentlichungstag der Anmeldung: **05.12.90 Patentblatt 90/49**

(84) Benannte Vertragsstaaten: **CH DE ES FR GB IT LI**

(71) Anmelder: **BASF Aktiengesellschaft
Carl-Bosch-Strasse 38
D-6700 Ludwigshafen(DE)**

(72) Erfinder: **Hansen, Guenter, Dr.
Alwin-Mittasch-Platz 8
D-6700 Ludwigshafen(DE)**
Erfinder: **Lamm, Gunther, Dr.
Heinrich-Heine-Strasse 7
D-6733 Hassloch(DE)**

## (54) Benzisothiazolazofarbstoffe mit einer Kupplungskomponente aus der Thiazol- ioder Pyridinreihe.

(57) Benzisothiazolazofarbstoffe der Formel

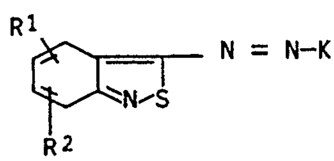 ,

in der
$R^1$ Wasserstoff oder Chlor,
$R^2$ Wasserstoff, Chlor, Brom, Nitro oder den Rest $SO_2$-$NL^1L^2$, wobei $L^1$ und $L^2$ unabhängig voneinander für gegebenenfalls substituiertes $C_1$-$C_8$-Alkyl stehen, und
K einen Rest der Formel

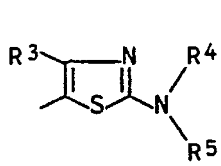 oder 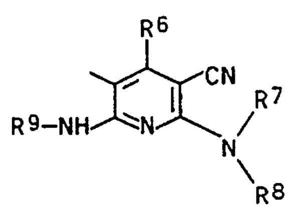 ,

bedeuten, wobei
$R^3$ für gegebenenfalls substituiertes $C_1$-$C_{12}$-Alkyl, $C_5$-$C_7$-Cycloalkyl, gegebenenfalls substituiertes Phenyl, Pyridyl, Furyl, Thienyl oder $C_1$-$C_4$-Alkylthienyl und
$R^4$ und $R^5$ unabhängig voneinander für gegebenenfalls substituiertes $C_1$-$C_{12}$-Alkyl,
$R^6$ für Wasserstoff oder $C_1$-$C_3$-Alkyl und
$R^7$ $R^8$ und $R^9$ unabhängig voneinander für Wasserstoff oder gegebenenfalls substituiertes $C_1$-$C_{12}$-Alkyl stehen,

EP 0 400 451 A1

Xerox Copy Centre

mit der Maßgabe, daß bei mindestens einem der Reste $R^4$ und $R^5$ die Alkylkette durch 1 bis 4 Sauerstoffatome unterbrochen ist, und daß $R^7$, $R^8$ und $R^9$ nicht gleichzeitig Wasserstoff bedeuten sowie deren Verwendung zum Färben von textilen Fasern.

## Benzisothiazolazofarbstoffe mit einer Kupplungskomponente aus der Thiazol- oder Pyridinreihe

Die vorliegende Erfindung betrifft neue Benzisothiazolazofarbstoffe der Formel I

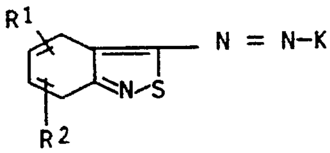

(I) ,

in der
$R^1$ Wasserstoff oder Chlor,
$R^2$ Wasserstoff, Chlor, Brom, Nitro oder den Rest $SO_2$-$NL^1L^2$, wobei $L^1$ und $L^2$ gleich oder verschieden sind und unabhängig voneinander jeweils für $C_1$-$C_8$-Alkyl, das gegebenenfalls durch 1 bis 3 Sauerstoffatome unterbrochen ist, stehen, und
K einen Rest der Formel

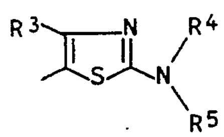

oder

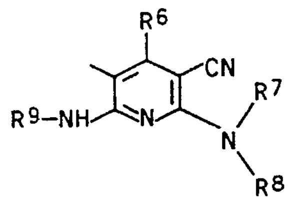

bedeuten, wobei
$R^3$ für $C_1$-$C_{12}$-Alkyl, das gegebenenfalls durch 1 bis 4 Sauerstoffatome unterbrochen und/oder durch Phenyl oder Phenoxy substituiert ist, $C_5$-$C_7$-Cycloalkyl, gegebenenfalls substituiertes Phenyl, Pyridyl, Furyl, Thienyl oder $C_1$-$C_4$-Alkylthienyl und
$R^4$ und $R^5$ gleich oder verschieden sind und unabhängig voneinander jeweils für $C_1$-$C_{12}$-Alkyl, das gegebenenfalls durch 1 bis 4 Sauerstoffatome unterbrochen und/oder durch Hydroxy oder Phenyl substituiert ist,
$R^6$ für Wasserstoff oder $C_1$-$C_3$-Alkyl und
$R^7$ $R^{87}$ und $R^9$ gleich oder verschieden sind und unabhängig voneinander jeweils für Wasserstoff oder $C_1$-$C_{12}$-Alkyl, das gegebenenfalls durch 1 bis 4 Sauerstoffatome unterbrochen und/oder durch Hydroxy, Phenoxy, Phenyl oder $C_1$-$C_4$-Alkanoyloxy substituiert ist, oder $R^9$ auch für 3-(Imidazol-1-yl)propyl stehen,
mit der Maßgabe, daß bei mindestens einem der Reste $R^4$ und $R^5$ die Alkylkette durch 1 bis 4 Sauerstoffatome unterbrochen ist und daß $R^7$, $R^8$ und $R^9$ nicht gleichzeitig Wasserstoff bedeuten.

Aus der EP-A-84 150 sind bereits Benzisothiazolazofarbstoffe bekannt, die sich für das Färben oder Bedrucken von Polyester-Baumwolle-Mischgewebe eignen. Polyestergewebe kann jedoch mit diesen Farbstoffen nur unzureichend gefärbt werden.

Aufgabe der vorliegenden Erfindung war es deshalb, neue Azofarbstoffe mit einer Diazokomponente aus der Benzisothiazolreihe bereitzustellen, die über ein vorteilhaftes anwendungstechnisches Eigenschaftsprofil verfügen.

Demgemäß wurden die oben näher bezeichneten Benzisothiazolazofarbstoffe der Formel I gefunden.

Alle in der obengenannten Formel I auftretenden Alkylgruppen können sowohl geradkettig als auch verzweigt sein.

Wenn in der oben genannten Formel I substituierte Phenylgruppen auftreten, so können als Substituenten beispielsweise $C_1$-$C_4$-Alkyl, $C_1$-$C_4$-Alkoxy, Halogen, dabei insbesondere Chlor oder Brom, $C_1$-$C_4$-Alkanoylamino oder Nitro in Betracht kommen.

Reste $R^6$ sind z.B. Methyl, Ethyl, Propyl oder Isopropyl.

Reste $R^3$, $R^4$, $R^5$, $R^7$, $R^8$, $R^9$, $L^1$ und $L^2$ sind z.B. Methyl, Ethyl, Propyl, Isopropyl, Butyl, Isobutyl, sec-Butyl, Pentyl, Isopentyl, Neopentyl, tert-Pentyl, Hexyl, Heptyl, Octyl, 2-Ethylhexyl oder Isooctyl.

Reste $R^3$, $R^4$, $R^5$, $R^7$, $R^8$, $R^9$ sind weiterhin z.B. Nonyl, Isononyl, Decyl, Isodecyl, Undecyl, Dodecyl, Benzyl oder 1- oder 2-Phenylethyl. (Die obigen Bezeichnungen Isooctyl, Isononyl und Isodecyl sind

Trivialbezeichnungen und stammen von den nach der Oxosynthese erhaltenen Alkoholen - vgl. dazu Ullmanns Enzyklopädie der technischen Chemie, 4. Auflage, Band 7, Seiten 215 bis 217, sowie Band 11, Seiten 435 und 436.)

Reste $R^3$ sind weiterhin z.B. Cyclopentyl, Cyclohexyl, Methylcyclohexyl, Cycloheptyl, 2-, 3- oder 4-Methylphenyl, 2-, 3- oder 4-Methoxyphenyl, 2-, 3- oder 4-Chlorphenyl, 2,4-Dichlorphenyl, 2-, 3- oder 4-Bromphenyl, 2-, 3- oder 4-Formylaminophenyl, 2-, 3- oder 4-Acetylaminophenyl, 2-, 3- oder 4-Nitrophenyl oder 5-Methylthien-2-yl.

Reste $R^3$, $R^4$, $R^5$, $R^7$, $R^8$, $R^9$, $L^1$ und $L^2$ sind weiterhin 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- oder 4-Butoxybutyl, 4,8-Dioxadecyl, 3, 6, 9-Trioxadecyl oder 3, 6, 9-Trioxaundecyl.

Reste $R^4$, $R^5$, $R^7$, $R^8$ und $R^9$ sind weiterhin z.B. 2-Hydroxyethyl, 2- oder 3-Hydroxypropyl, 2- oder 4-Hydroxybutyl, 5-Hydroxy-3-oxapentyl, 6-Hydroxy-4-oxahexyl, 8-Hydroxy-4-oxaoctyl oder 9-Hydroxy-4, 7-dioxanonyl.

Reste $R^3$, $R^7$, $R^8$ und $R^9$ sind weiterhin z.B. 2-Phenoxyethyl, 2- oder 3-Phenoxypropyl, 2- oder 4-Phenoxybutyl oder 6-Phenoxy-4-oxahexyl.

Reste $R^3$, $R^4$, $R^5$, $R^7$, $R^8$, $R^9$ sind weiterhin z.B. 3, 6, 9, 12-Tetraoxatridecyl oder 3, 6, 9, 12-Tetraoxatetradecyl.

Reste $R^7$, $R^8$ und $R^9$ sind weiterhin z.B. 2-Formyloxyethyl, 2-Acetyloxyethyl, 2- oder 3-Formyloxypropyl, 2- oder 3-Acetyloxypropyl, 2- oder 4-Formyloxybutyl, 2- oder 4-Acetyloxybutyl, 5-Formyloxy-3-oxapentyl, 5-Acetyloxy-3-oxapentyl, 6-Formyloxy4-oxaheptyl, 6-Acetyloxy-4-oxyheptyl, 8-Formyloxy-4-oxaoctyl, 8-Acetyloxy-4-oxaoctyl, 9-Formyloxy-4,7-dioxanonyl oder 9-Acetyloxy4,7-dioxanonyl.

Bevorzugt sind Benzisothiazolazofarbstoffe, die der Formel Ia

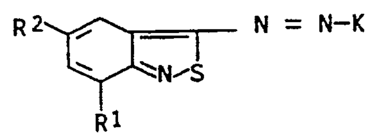

(Ia)

entsprechen, in der $R^1$, $R^2$ und K jeweils die obengenannte Bedeutung besitzen.

Besonders bevorzugt sind Benzisothiazolazofarbstoffe, die der Formel IIa

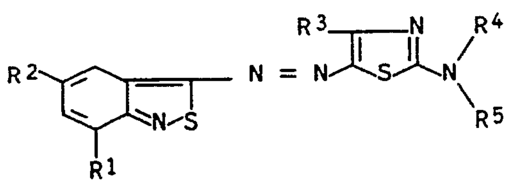

(IIa)

entsprechen, in der

$R^1$ Wasserstoff oder Chlor,

$R^2$ Wasserstoff, Chlor oder Nitro und

$R^4$ und $R^5$ unabhängig voneinander $C_1$-$C_6$-Alkyl, das gegebenenfalls durch 1 oder 2 Sauerstoffatome unterbrochen ist, bedeuten und

$R^3$ die obengenannte Bedeutung besitzt.

Weiterhin besonders bevorzugt sind Benzisothiazolazofarbstoffe, die der Formel IIb

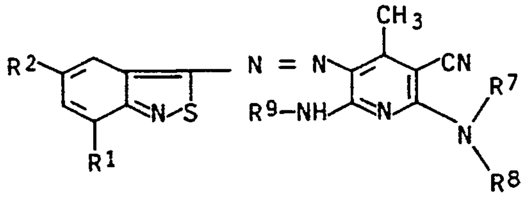

(IIb)

entsprechen, in der

$R^1$ Wasserstoff,
$R^2$ Wasserstoff, Chlor oder Nitro,
$R^7$ und $R^8$ unabhängig voneinander $C_1$-$C_{12}$-Alkyl, das gegebenenfalls durch 1 bis 4 Sauerstoffatome unterbrochen und/oder durch Hydroxy, Phenoxy, Formyloxy oder Acetyloxy substituiert ist, oder $R^7$ auch Wasserstoff und
$R^9$ Wasserstoff oder $C_1$-$C_{12}$-Alkyl, das gegebenenfalls durch 1 bis 4 Sauerstoffatome unterbrochen und/oder durch Hydroxy, Phenoxy, Formyloxy oder Acetyloxy substituiert ist, bedeuten.

Besonders hervorzuheben sind auch Benzisothiazolazofarbstoffe der Formel I, in der der Rest $R^4$ vom Rest $R^5$ verschieden ist.

Die Herstellung der erfindungsgemäßen Benzisothiazolazofarbstoffe erfolgt in an sich bekannter Weise. Beispielsweise kann man ein Aminobenzisothiazol der Formel III

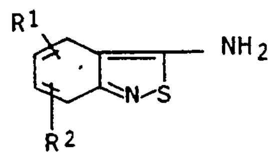 (III),

in der $R^1$ und $R^2$ jeweils die obengenannte Bedeutung besitzen, diazotieren und mit einem Isothiazol der Formel IV oder einem Diaminopyridin der Formel V

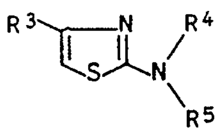

(IV)

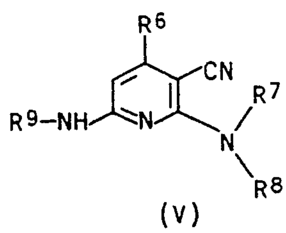 ,

(V)

wobei $R^3$, $R^4$, $R^5$, $R^6$ $R^7$, $R^8$ und $R^9$ jeweils die obengenannte Bedeutung besitzen, kuppeln.

Aminobenzisothiazole der Formel III sind bereits bekannt und z.B. in der DE-A-2 412 975 beschrieben oder können analog zu den dort genannten Methoden erhalten werden.

Bei den Thiazolen der Formel IV handelt es sich im allgemeinen ebenfalls um bekannte Verbindungen. Sie sind z.B. in der US-A-3 770 719 oder in J.V. Metzger "Heterocyclic Compounds - Thiazole and its Derivatives", Vol. 34, Part 1, Interscience Publ., John Wiley, New York, 1979, beschrieben oder können analog zu den dort genannten Methoden erhalten werden.

Auch die Diaminopyridine der Formel V sind bekannt und beispielsweise in der US-A-3 853 895 beschrieben oder können analog zu den dort genannten Methoden erhalten werden.

Weitere Einzelheiten der Herstellung der erfindungsgemäßen Farbstoffe können den Beispielen entnommen werden.

Die neuen Benzisothiazolazofarbstoffe der Formel I eignen sich in vorteilhafter Weise als Dispersionsfarbstoffe zum Färben von textilen Fasern, insbesondere von Celluloseestern oder Polyestern, aber auch von Polyamiden oder Mischgeweben aus Polyestern und Cellulosefasern.

Man erhält Färbungen mit guten Naßechtheiten. Die neuen Farbstoffe weisen ein gutes Aufbauvermögen auf.

Die folgenden Beispiele sollen die Erfindung näher erläutern.

Beispiel 1

19,5 g der Diazokomponente der Formel

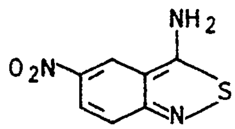

wurden gemäß dem in der DE-A-2 412 975 beschriebenen Verfahren hergestellt und mit Nitrosylschwefelsäure diazotiert. Die resultierende Diazoniumsalzlösung wurde dann zu 32,6 g der Kupplungskomponente der Formel

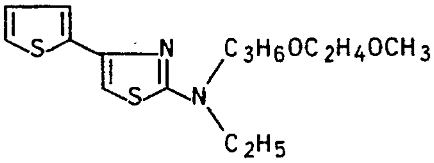

,

die in einem auf 0°C abgekühlten Gemisch aus 100 g Eisessig, 30 g Propionsäure, 1 g Amidosulfonsäure und 50 g Eis gelöst waren, zugegeben. Während der Zugabe der Diazoniumsalzlösung hielt man die Temperatur durch Eiszugabe bei -5 bis +5°C und hob den pH-Wert durch Zugabe von wäßriger Natriumacetatlösung auf ca. 0 bis 0,5 an. Die Kupplung verlief bereits schwefelsauer und war nach wenigen Sekunden beendet.

Der entstandene Farbstoff der Formel

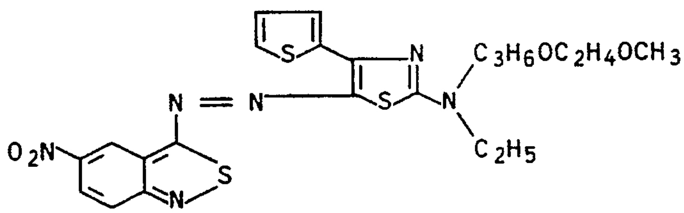

wurde abgesaugt und mit Wasser gewaschen. Man erhielt 53 g eines Pulvers, das Polyestergewebe in dunkelgrünen Tönen mit gutem Farbaufbau und sehr guten Echtheiten färbt. Der Farbstoff löst sich in N,N-Dimethylformamid mit grüner Farbe. Sein Absorptionsmaximum, gemessen in einem Gemisch aus N,N-Dimethylformamid und Eisessig (9 : 1 v/v), beträgt 653 nm.

Beispiel 2

Man kuppelte das in Beispiel 1 beschriebene Diazoniumsalzgemisch analog Beispiel 1 mit 34 g der Kupplungskomponente der Formel

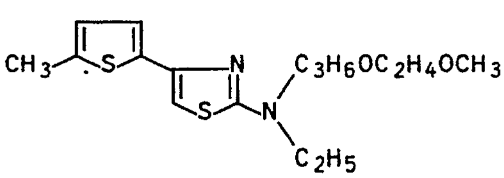

und erhielt 54 g eines grünen Farbstoffs mit ähnlich guten Eigenschaften. Sein Absorptionsmaximum beträgt 654 nm.

Beispiel 3

Die in Bespiel 1 beschriebene Diazoniumsalzlösung wurde in eine Lösung aus 32,6 g der Kupplungskomponente der Formel

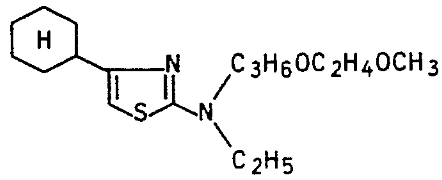

die analog Beispiel 1 hergestellt wurden, eingerührt. Anschließend hob man den pH-Wert durch Zugabe von wäßriger Natriumacetatlösung bei < 5° C auf 1,0 bis 1,5 an.

Die Kupplung war nach wenigen Minuten beendet. Der entstandene Farbstoff der Formel

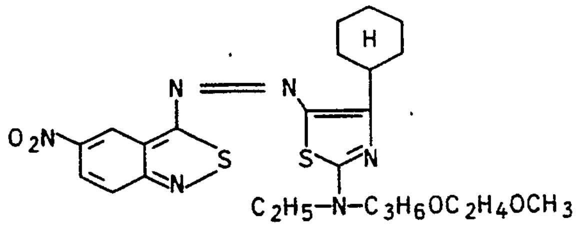

wurde wie üblich isoliert. Er löst sich in N,N-Dimethylformamid mit rotstichig blauem Farbton und färbt Polyestergewebe rotstichig blau an. Farbstoffausbeute: 31 g

Beispiel 4

Die in Beispiel 1 beschriebene Diazoniumsalzlösung wurde analog Beispiel 1 mit 32 g der Kupplungskomponente der Formel

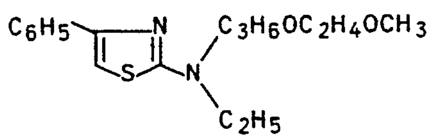

gekuppelt. Man erhielt den Farbstoff der Formel

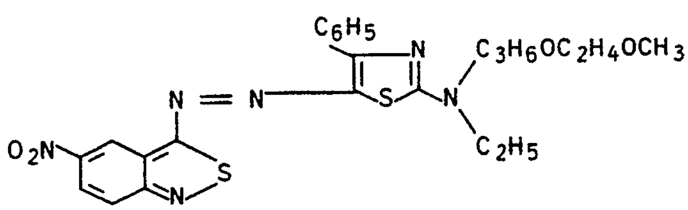

dessen Isolierung in üblicher Weise erfolgte. Der Farbstoff färbt Polyestergewebe in lichtechten mittelblauen Tönen an. Sein Absorptionsmaximum, gemessen in einer Mischung aus N,N-Dimethylformamid und Eisessig (9:1 v/v), beträgt 629 nm.

Analog den Beispielen 1 bis 4 können die in der folgenden Tabelle 1 aufgeführten Farbstoffe erhalten werden.

Tabelle 1

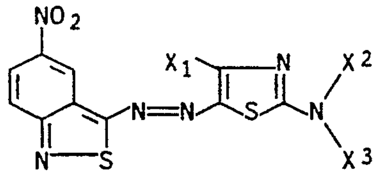

| Bsp. Nr. | $X^1$ | $X^2$ | $X^3$ | Farbton |
|---|---|---|---|---|
| 5 | 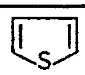 | $C_2H_5$ | $C_2H_4OC_2H_4OCH_3$ | grün |
| 6 | 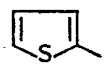 | $C_2H_5$ | $(C_2H_4O)_2C_2H_5$ | grün |
| 7 | 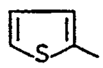 | $C_2H_5$ | $(C_2H_4O)_3C_2H_5$ | grün |
| 8 | 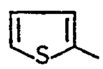 | $C_3H_5$ | $C_3H_6OC_2H_4OC_2H_5$ | grün |
| 9 | 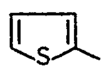 | $C_3H_7$ (n) | $(C_2H_4O)_2CH_3$ | grün |
| 10 | 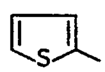 | $C_3H_7$ (n) | $(C_2H_4O)_2C_2H_5$ | grün |
| 11 | 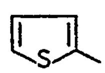 | $C_3H_7$ (n) | $C_3H_6OC_2H_4OCH_3$ | grün |
| 12 | 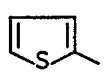 | $C_3H_6OCH_3$ | $C_3H_6OC_2H_4OC_2H_5$ | grün |
| 13 | 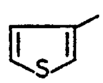 | $C_2H_5$ | $(C_2H_4O)_2CH_3$ | grünst. blau |
| 14 | 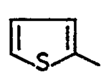 | $C_2H_5$ | $(C_2H_4O)_2C_2H_5$ | grünst. blau |
| 15 | 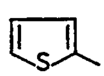 | $C_2H_5$ | $C_3H_6OC_2H_4OCH_3$ | grünst. blau |

Fortsetzung Tabelle 1

| Bsp. Nr. | $X^1$ | $X^2$ | $X^3$ | Farbton |
|---|---|---|---|---|
| 16 | 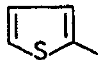 | $C_2H_5$ | $C_3H_6OC_2H_4OC_2H_5$ | grünst. blau |
| 17 | 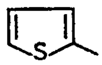 | $C_2H_5$ | $C_3H_6O(C_2H_4O)_2C_2H_5$ | grünst. blau |
| 18 | 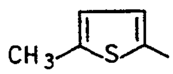 | $C_2H_5$ | $(C_2H_4O)_2C_2H_3$ | grün |
| 19 | 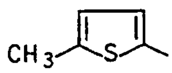 | $C_2H_5$ | $(C_2H_4O)_2C_2H_5$ | grün |
| 20 | 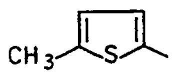 | $C_2H_5$ | $C_3H_6OC_2H_4OC_2H_5$ | grün |
| 21 | 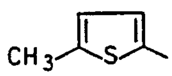 | $C_3H_7$ (i) | $C_3H_6OC_2H_4OC_2H_5$ | grün |
| 22 | 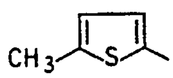 | $C_3H_7$ (i) | $C_3H_6OC_2H_4OCH_3$ | grün |
| 23 | 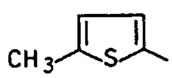 | $C_2H_5$ | $C_3H_6OCH(CH_3)CH_2OCH_3$ | grün |
| 24 | 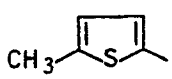 | $C_2H_4OCH_3$ | $C_3H_6OC_2H_4OC_2H_5$ | grün |
| 25 | $C_6H_5$ | $C_2H_5$ | $(C_2H_4O)_2CH_3$ | blau |
| 26 | $C_6H_5$ | $C_2H_5$ | $(C_2H_4O)_2C_2H_5$ | blau |
| 27 | $C_6H_5$ | $C_2H_5$ | $C_3H_6OC_2H_4OC_2H_5$ | blau |
| 28 | $C_6H_5$ | $C_2H_5$ | $C_3H_6O(C_2H_4O)_2C_2H_5$ | blau |
| 29 | 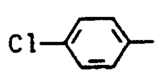 | $C_2H_5$ | $C_3H_6OC_2H_4OCH_3$ | blau |

Fortsetzung Tabelle 1

| Bsp. Nr. | X1 | X2 | X3 | Farbton |
|---|---|---|---|---|
| 30 | 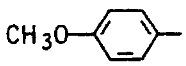 | $C_2H_5$ | $C_3H_6OC_2H_4OCH_3$ | grünblau |
| 31 | 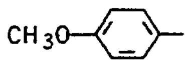 | $C_2H_5$ | $C_3H_6OC_2H_4OC_2H_5$ | grünblau |
| 32 | 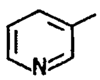 | $C_2H_5$ | $C_3H_6OC_2H_4OC_2H_5$ | blau |
| 33 | 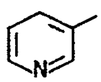 | $C_2H_5$ | $C_3H_6OC_2H_4OCH_3$ | blau |
| 34 | $C_6H_5OCH_2$ | $C_2H_5$ | $C_3H_6OC_2H_4OCH_3$ | rotst. blau |
| 35 | $C_6H_5$ | $C_2H_5$ | $C_3H_6OCH_3$ | rotst. blau |
| 36 | $C_6H_5$ | $C_2H_5$ | $C_3H_6OC_2H_4OCH_3$ | rotst. blau |
| 37 | $C_6H_5$ | $C_2H_5$ | $C_3H_6OC_2H_4OC_2H_5$ | rotst. blau |

Beispiel 38

15 g der Diazokomponente der Formel

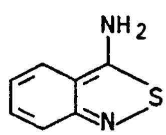

wurden bei 0 bis 4 °C in ein Gemisch aus 110 g Schwefelsäure, 18 g Eis und 32 g 45 gew.%iger Nitrosylschwefelsäure eingerührt. Man rührte die Diazotierung 4 Stunden bei 0 bis 5 °C und erhielt eine klare Lösung. Diese wurde mit einer, auf 0 °C abgekühlten Lösung aus 26,2 g 2-[N-Ethyl-N-(2-methoxyethyl)amino]-4-phenylthiazol in 100 ml Eisessig, 20 ml Propionsäure, 0,5 g Amidosulfonsäure und 20 g Wasser vereinigt. Das Gemisch wurde bei 0 bis 5 °C mit Natriumacetat auf einen pH-Wert von 0,5 bis 1,2 abgepuffert. Dabei wurde zur Kühlung und Erhaltung der Rührfähigkeit Eis zugesetzt.

Die Kupplung war schnell beendet und der Farbstoff der Formel

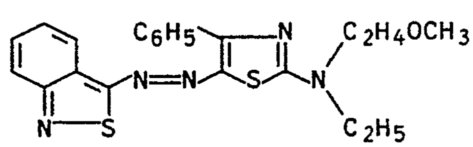

wurde wie üblich isoliert.

Man erhielt 41 g eines blauschwarzen Pulvers, das sich in N,N-Dimethylformamid mit rotstichig blauem

Farbton löst und Polyestergewebe nach dem Diffusionstransferdruckverfahren in echten rotstichig blauen Tönen färbt.

Die in der folgenden Tabelle 2 genannten Farbstoffe mit gleicher Diazokomponente oder mit halogenhaltigen 3-Aminobenzisothiazolen können analog Beispiel 38 erhalten werden. Die Kupplungskomponente kann entgegen Beispiel 38 jedoch auch in wäßriger verdünnter Salz- oder Schwefelsäure gelöst werden, da die Diazoniumsalze auch in wäßriger Lösung relativ stabil sind.

4-Alkyl- oder 4-Aralkylthiazole kuppeln jedoch erst bei höherem pH-Wert (2 bis 3). In diesen Fällen kann es zweckmäßig sein, Essigsäure als Lösungsmittel zu verwenden.

Tabelle 2

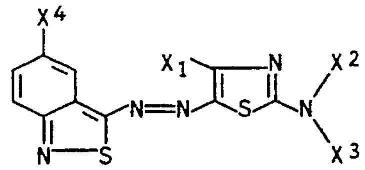

| Bsp. Nr. | $X^1$ | $X^2$ | $X^3$ | $X^4$ | Farbton |
|---|---|---|---|---|---|
| 39 | $C_6H_5$ | $CH_3$ | $C_2H_4OC_2H_4OCH_3$ | H | rotst. blau |
| 40 | $C_6H_5$ | $C_2H_5$ | $C_2H_4OC_2H_4OCH_3$ | H | rotst. blau |
| 41 | $C_6H_5$ | $CH_5$ | $C_3H_6OC_2H_4OCH_3$ | H | marineblau |
| 42 | $C_6H_5$ | $C_2H_4OCH_3$ | $C_3H_6OCH_3$ | H | rotst. blau |
| 43 | $C_6H_5$ | $C_3H_6OCH_3$ | $C_3H_6OCH_3$ | H | rotst. blau |
| 44 | $C_6H_5$ | $C_2H_5$ | $C_3H_6OC_2H_4OC_2H_5$ | H | marineblau |
| 45 | $C_6H_5$ | $C_2H_4OCH_3$ | $C_3H_6OC_2H_5$ | H | rotst. blau |
| 46 | $C_6H_5$ | $C_3H_6OCH_3$ | $C_3H_6OC_2H_5$ | H | rotst. blau |
| 47 | $C_6H_5$ | $C_2H_5$ | $CH_2(C_2H_4O)_3CH_3$ | H | rotst. blau |
| 48 | $C_6H_5$ | $C_2H_5$ | $(C_2H_4)_2OCH_3$ | Cl | rotst. blau |
| 49 | $C_6H_5$ | $C_2H_5$ | $CH_2(C_2H_4O)_2CH_3$ | Cl | marineblau |
| 50 | $C_6H_5$ | $C_2H_5$ | $CH_2(C_2H_4O)_2C_2H_5$ | Cl | marineblau |
| 51 | $C_6H_5$ | $C_3H_6OCH_3$ | $C_3H_6OCH_3$ | Cl | rotst. blau |
| 52 | $C_6H_5$ | $C_3H_6OCH_3$ | $C_3H_6OC_2H_5$ | Cl | rotst. blau |
| 53 | $C_6H_5$ | $C_2H_5$ | C§H&OCH§ | Cl | rotst. blau |
| 54 | C&H5 | $C_2H_5$ | $C_3H_6OCH_3$ | H | rotst. blau |
| 55 | 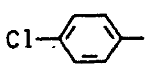 | $C_2H_5$ | $C_3H_6OCH_3$ | H | rotst. blau |
| 56 | 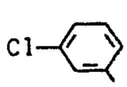 | $C_2H_5$ | $C_3H_6OCH_3$ | H | rotst. blau |

Tabelle 2 (Fortsetzung)

| Bsp. Nr. | $X^1$ | $X^2$ | $X^3$ | $X^4$ | Farbton |
|---|---|---|---|---|---|
| 57 | 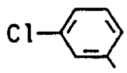 | $C_2H_5$ | $C_3H_6OC_2H_4OCH_3$ | H | rotst. blau |
| 58 | 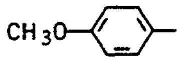 | $C_2H_5$ | $C_3H_6OC_2H_4OCH_3$ | H | blau |
| 59 | 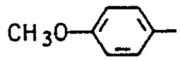 | $C_2H_5$ | $C_3H_6OCH_3$ | H | blau |
| 60 | 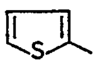 | $C_2H_5$ | $C_3H_6OCH_3$ | H | blau |
| 61 | 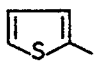 | $C_2H_5$ | $CH_2(C_2H_4O)_2CH_3$ | H | blau |
| 62 | 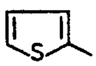 | $C_2H_5$ | $CH_2(C_2H_4O)_2C_2H_5$ | H | blau |
| 63 | 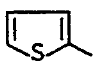 | $C_2H_5$ | $(C_2H_4O)_2CH_3$ | H | blau |
| 64 | 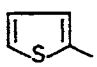 | $C_3H_7$ (n) | $(C_2H_4O)_2CH_3$ | H | blau |
| 65 | 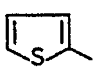 | $C_3H_7$ (n) | $CH_2(C_2H_4O)_2CH_3$ | H | blau |
| 66 | 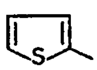 | $C_3H_6OCH_3$ | $C_3H_6OCH_3$ | H | blau |
| 67 | 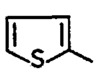 | $C_3H_6OCH_3$ | $C_3H_6OCH_3$ | Cl | blau |
| 68 | 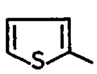 | $C_3H_6OCH_3$ | $C_3H_6OCH_3$ | Br | blau |

Tabelle 2 (Fortsetzung)

| Bsp. Nr. | $X^1$ | $X^2$ | $X^3$ | $X^4$ | Farbton |
|---|---|---|---|---|---|
| 69 | 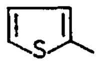 | $C_2H_5$ | $C_3H_6OCH_3$ | Cl | blau |
| 70 | 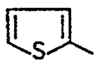 | $C_2H_5$ | $(C_2H_4O)_2CH_3$ | Cl | blau |
| 71 | 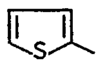 | $C_2H_5$ | $CH_2(C_2H_4O)_2CH_3$ | Cl | blau |
| 72 | 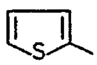 | $C_3H_6OCH_3$ | $C_3H_6OCH_5$ | Cl | blau |
| 73 | 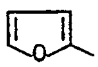 | $C_2H_5$ | $CH_2(C_2H_4O)_2CH_3$ | Cl | blau |
| 74 | 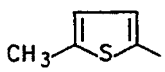 | $C_2H_5$ | $CH_2(C_2H_4O)_2CH_3$ | Cl | blau |
| 75 | 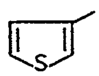 | $C_2H_5$ | $CH_2(C_2H_4O)_2CH_3$ | Cl | rotst. blau |
| 76 | 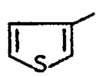 | $C_2H_5$ | $CH_2(C_2H_4O)_2CH_5$ | Cl | rotst. blau |
| 77 | 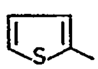 | $C_2H_5$ | $CH_2(C_2H_4O)_2C_2H_5$ | H | rotst. blau |
| 78 | 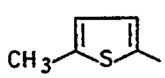 | $C_2H_5$ | $CH_2(C_2H_4O)_2C_2H_5$ | H | rotst. blau |
| 79 | 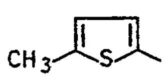 | $C_2H_5$ | $CH_2(C_2H_4O)_2CH_3$ | H | rotst. blau |
| 80 | 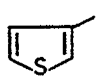 | $C_2H_5$ | $CH_2(C_2H_4O)_2CH_3$ | H | rotst. blau |

Tabelle 2 (Fortsetzung)

| Bsp. Nr. | $X^1$ | $X^2$ | $X^3$ | $X^4$ | Farbton |
|---|---|---|---|---|---|
| 81 | 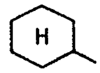 | $C_3H_6OCH_3$ | $C_3H_6OCH_3$ | H | bordo |
| 82 | 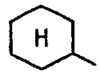 | $C_2H_5$ | $CH_2(C_2H_4O)_2CH_3$ | H | bordo |
| 83 | 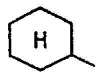 | $C_3H_6OCH_3$ | $C_3H_6OCH_3$ | H | bordo |
| 84 | 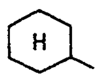 | $C_3H_6OCH_3$ | $C_2H_4OCH_3$ | H | bordo |
| 85 | 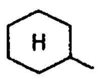 | $C_3H_6OCH_3$ | $C_2H_4OCH_3$ | Cl | bordo |
| 86 | 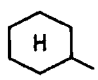 | $C_3H_6OCH_3$ | $C_3H_6OCH_3$ | Cl | bordo |
| 87 | 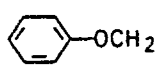 | $C_3H_6OCH_3$ | $C_3H_6OCH_3$ | H | bordo |
| 88 | 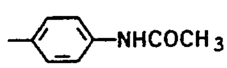 | $C_2H_5$ | $CH_2(C_2H_4O)_2CH_3$ | H | blau |
| 89 | 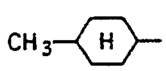 | $C_2H_4OCH_3$ | $C_3H_6OCH_3$ | H | bordo |

Beispiel 90

15 g 3-Aminobenzisothiazol wurden in ein auf 0 °C abgekühltes Gemisch aus 110 g 80 gew.%iger Schwefelsäure, 15 g Eisessig und 32 g 45 gew.%iger Nitrosylschwefelsäurelösung unter Kühlen so eingerührt, daß die Temperatur der Diazotierung bei maximal 5 °C gehalten wurde. Man rührte 4 Stunden nach und erhielt dann eine Lösung, die unter Rühren mit 26,4 g der Kupplungskomponente der Formel

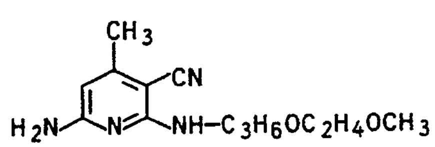 ,

bei 0 °C gelöst in 500 ml Wasser und 10 g konzentrierter Salzsäure, vereinigt wurde. Während der Zugabe der Diazoniumsalzlösung kühlte man durch Zugabe von Eis. Dann pufferte man das Kupplungsgemisch auf einen pH-Wert von 2 bis 3 ab und erreichte so eine rasche Umsetzung zum Farbstoff der Formel

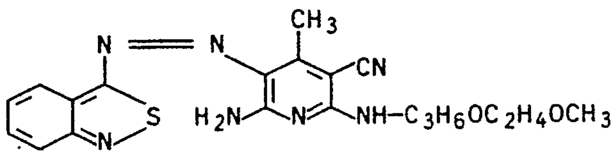

der wie üblich durch Absaugen, Waschen und Trocknen isoliert wurde. Man erhielt 42 g eines rotbraunen Pulvers, das sich in N,N-Dimethylformamid mit blaustichig roter Farbe löst und Polyestergewebe in echten, blaustichig roten Tönen färbt.

Das Absorptionsmaximum des Farbstoffes, gemessen in einem Gemisch aus N,N-Dimethylformamid und Eisessig (9 : 1 v/v), beträgt 530 nm.

Analog Beispiel 50 können die in den Tabellen 3 und 4 aufgeführten Farbstoffe erhalten werden. Farbstoffe mit längeren Alkyl(ether)-Resten können jedoch auch in flüssigem Aggregatzustand anfallen. In diesem Fall empfiehlt sich die Extraktion des Farbstoffes mit einem in Wasser nicht oder nur wenig löslichenm organischen Lösungsmittel, beispielsweise Isobutanol, Essigester oder xylol.

Tabelle 3

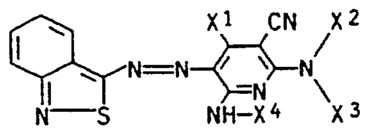

| Bsp. Nr. | $X^1$ | $X^2$ | $X^3$ | $X^4$ | Farbton |
|---|---|---|---|---|---|
| 91 | H | H | $C_3H_6OC_4H_8OH$ | H | blaust. rot |
| 92 | H | H | $C_3H_6OC_2H_4OCH_3$ | H | blaust. rot |
| 93 | $CH_3$ | H | $C_3H_6OC_4H_8OH$ | H | blaust. rot |
| 94 | $CH_3$ | H | $C_3H_6OC_4H_8OCHO$ | H | blaust. rot |
| 95 | $CH_3$ | H | $C_3H_6OC_4H_8OCOCH_3$ | H | blaust. rot |
| 96 | $CH_3$ | H | $C_3H_4OC_2H_4OCOCH_3$ | H | blaust. rot |
| 97 | $CH_3$ | H | $C_2H_4OC_2H_4OH$ | H | blaust. rot |
| 98 | $C_2H_5$ | H | $C_2H_4OC_2H_4OH$ | H | blaust. rot |
| 99 | $C_3H_7$ (n) | H | $C_2H_4OC_2H_4OH$ | H | blaust. rot |
| 100 | $CH_3$ | H | $C_3H_6OC_2H_4OC_6H_5$ | H | blaust. rot |
| 101 | $CH_3$ | H | H | $C_3H_6OC_4H_8OH$ | blaust. rot |
| 102 | $CH_3$ | H | H | $C_3H_6OC_2H_4OCH_3$ | blaust. rot |
| 103 | $CH_3$ | $C_2H_5$ | $C_3H_6OC_2H_4OCH_3$ | $C_3H_6OCH_3$ | violett |
| 104 | $CH_3$ | $C_2H_5$ | $C_3H_6OCH_3$ | $C_3H_6OCH_3$ | violett |
| 105 | $CH_3$ | $C_2H_5$ | $C_3H_6OH_5$ | $C_3H_6OC_2H_4OC_6H_5$ | violett |
| 106 | $CH_3$ | $C_2H_5$ | $C_2H_4OCH_3$ | $C_3H_6OC_2H_4OC_6H_5$ | violett |
| 107 | $CH_3$ | $C_2H_5$ | $C_2H_4OCH_3$ | $C_3H_6OCOCH_3$ | violett |
| 108 | $CH_3$ | $C_2H_5$ | $C_3H_6OCH_3$ | $C_3H_6OCOCH_3$ | violett |

Tabelle 3 (Fortsetzung

| Bsp. Nr. | $X^1$ | $X^2$ | $X^3$ | $X^4$ | Farbton |
|---|---|---|---|---|---|
| 109 | $CH_3$ | $C_2H_5$ | $C_3H_6OCH_3$ | $C_3H_6OH$ | violett |
| 110 | $CH_3$ | $C_2H_4OCH_3$ | $C_2H_4OCH_3$ | $C_3H_6OC_2H_4OC_6H_5$ | violett |
| 111 | $CH_3$ | $C_2H_5$ | $C_2H_5$ | $C_3H_6OC_2H_4OC_6H_3$ | violett |
| 112 | $CH_3$ | $C_2H_4OCH_3$ | $C_2H_4OCH_3$ | $C_3H_6OCOCH_3$ | violett |
| 113 | $CH_3$ | H | $C_3H_6OCH_4H_8OH$ | $C_2H_5$ | violett |
| 114 | $CH_3$ | H | $C_3H_6OC_2H_4OCH_3$ | $C_2H_5$ | violett |
| 115 | $CH_3$ | H | $C_3H_6OC_2H_4OCH_3$ | $C_3H_6OCH_3$ | violett |
| 116 | $CH_3$ | H | $C_3H_6OC_2H_4OC_2H_5$ | $C_3H_6OCH_3$ | violett |
| 117 | $CH_3$ | H | $C_3H_6OC_2H_4OC_2H_5$ | $C_3H_6OH$ | violett |
| 118 | $CH_3$ | H | $C_3H_6OC_2H_4OC_2H_5$ | $C_3H_6OCOCH_3$ | violett |
| 119 | $CH_3$ | H | $C_2H_4OCOCH_3$ | $C_3H_6OC_2H_4OC_6H_5$ | violett |

Tabelle 4

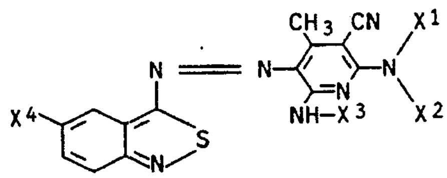

| Bsp. Nr. | $X^1$ | $X^2$ | $X^3$ | $X^4$ | Farbton |
|---|---|---|---|---|---|
| 120 | H | $C_3H_6OC_2H_4OCH_3$ | H | Cl | blaust. rot |
| 121 | H | $C_3H_6OC_4H_8OH$ | H | Cl | blaust. rot |
| 122 | H | $C_3H_6OC_4H_8OCOCH_3$ | H | Cl | blaust. rot |
| 123 | H | $(C_2H_4O)_2COCH_3$ | H | Cl | blaust. rot |
| 124 | H | $C_3H_6OC_2H_4OC_2H_5$ | H | Cl | blaust. rot |
| 125 | H | $CH_2(C_2H_4O)_3CH_3$ | H | Cl | blaust. rot |
| 126 | H | $CH_2(C_2H_4O)_3C_2H_5$ | H | Cl | blaust. rot |
| 127 | H | $CH_2(C_2H_4O)_2CH_3$ | $C_2H_5$ | Cl | violett |
| 128 | H | $CH_2(C_2H_4O)_2CH_3$ | $C_3H_6OCH_3$ | Cl | violett |
| 129 | H | $C_3H_6OC_4H_8OH$ | $C_3H_6OCH_3$ | Cl | violett |
| 130 | H | $C_3H_6OC_4H_8OH$ | $C_2H_5$ | Cl | violett |
| 131 | $C_2H_5$ | $C_3H_6OCH_3$ | $C_3H_6OC_2H_4OC_6H_5$ | Cl | violett |
| 132 | $C_2H_5$ | $C_3H_6OCH_3$ | $C_3H_6OCH_3$ | Cl | violett |
| 133 | $C_2H_5$ | $C_3H_6OC_2H4OC_6H_5$ | $C_3H_6OCH_3$ | Cl | violett |
| 134 | $C_2H_5$ | $C_2H_4OCOCH_3$ | $C_3H_6OC_2H_4OC_6H_5$ | Cl | violett |
| 135 | $C_2H_5$ | $C_3H_6OC_2H_4OC_6H_5$ | H | Cl | blaust. rot |

Tabelle 4 (Fortsetzung)

| Bsp. Nr. | $X^1$ | $X^2$ | $X^3$ | $X^4$ | Farbton |
|---|---|---|---|---|---|
| 136 | $C_2H_4OCH_3$ | $C_2H_4OCH_3$ | $C_3H_6OC_2H_4OC_6H_5$ | Cl | violett |
| 137 | $C_2H_4OCH_3$ | $C_2H_4OCH_3$ | $C_3H_6OC_2H_4OC_6H_5$ | Br | violett |
| 138 | $C_2H_4OCH_3$ | $C_3H_6OC_2H_4OCH_3$ | H | Br | blaust. rot |

## Ansprüche

1. Benzisothiazolazofarbstoffe der Formel I

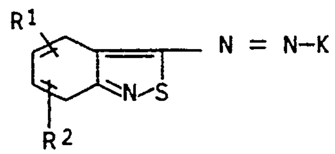

(I) ,

in der
$R^1$ Wasserstoff oder Chlor
$R^2$ Wasserstoff, Chlor, Brom, Nitro oder den Rest $SO_2$-$NL^1L^2$, wobei $L^1$ und $L^2$ gleich oder verschieden sind und unabhängig voneinander jeweils für $C_1$-$C_8$-Alkyl, das gegebenenfalls durch 1 bis 3 Sauerstoffatome unterbrochen ist, stehen, und
K einen Rest der Formel

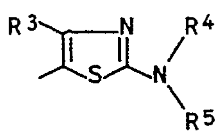

oder

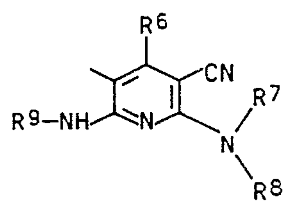

bedeuten, wobei
$R^3$ für $C_1$-$C_{12}$-Alkyl, das gegebenenfalls durch 1 bis 4 Sauerstoffatome unterbrochen und/oder durch Phenyl oder Phenoxy substituiert ist, $C_5$-$C_7$-Cycloalkyl, gegebenenfalls substituiertes Phenyl, Pyridyl, Furyl, Thienyl oder $C_1$-$C_4$-Alkylthienyl und
$R^4$ und $R^5$ gleich oder verschieden sind und unabhängig voneinander jeweils für $C_1$-$C_{12}$-Alkyl, das gegebenenfalls durch 1 bis 4 Sauerstoffatome unterbrochen und/oder durch Hydroxy oder Phenyl substituiert ist,
$R^6$ für Wasserstoff oder $C_1$-$C_3$-Alkyl und
$R^7$, $R^8$ und $R^9$ gleich oder verschieden sind und unabhängig voneinander jeweils für Wasserstoff oder $C_1$-$C_{12}$-Alkyl, das gegebenenfalls durch 1 bis 4 Sauerstoffatome unterbrochen und/oder durch Hydroxy, Phenoxy, Phenyl oder $C_1$-$C_4$-Alkanoyloxy substituiert ist, oder $R^9$ auch für 3-(Imidazol-1-yl)propyl stehen,
mit der Maßgabe, daß bei mindestens einem der Reste $R^4$ und $R^5$ die Alkylkette durch 1 bis 4 Sauerstoffatome unterbrochen ist und daß $R^7$, $R^8$ und $R^9$ nicht gleichzeitig Wasserstoff bedeuten.

2. Benzisothiazolazofarbstoffe nach Anspruch 1, die der Formel Ia

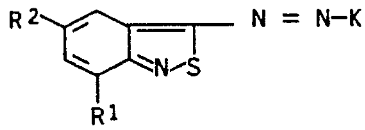

(Ia)

entsprechen, in der $R^1$, $R^2$ und K jeweils die obengenannte Bedeutung besitzen.

3. Benzisothiazolazofarbstoffe nach Anspruch 1, die der Formel IIa

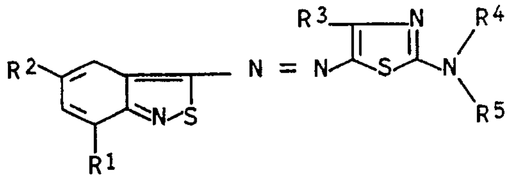

(IIa)

entsprechen, in der

$R^1$ Wasserstoff oder Chlor,

$R^2$ Wasserstoff, Chlor oder Nitro und

$R^4$ und $R^5$ unabhängig voneinander $C_1$-$C_6$-Alkyl, das gegebenenfalls durch 1 oder 2 Sauerstoffatome unterbrochen ist, bedeuten und

$R^3$ die in Anspruch 1 genannte Bedeutung besitzt.

4. Benzisothiazholazofarbstoffe nach Anspruch 1, die der Formel IIb

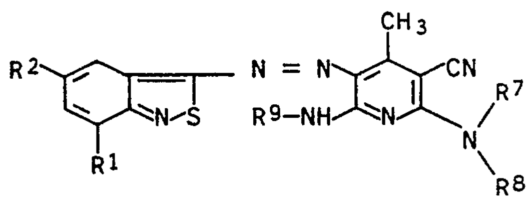

(IIb)

entsprechen, in der

$R^1$ Wasserstoff,

$R^2$ Wasserstoff, Chlor oder Nitro,

$R^7$ und $R^8$ unabhängig voneinander $C_1$-$C_{12}$-Alkyl, das gegebenenfalls durch 1 bis 4 Sauerstoffatome unterbrochen und/oder durch Hydroxy, Phenoxy, Formyloxy oder Acetyloxy substituiert ist, oder $R^7$ auch Wasserstoff und

$R^9$ Wasserstoff oder $C_1$-$C_{12}$-Alkyl, das gegebenenfalls durch 1 bis 4 Sauerstoffatome unterbrochen und/oder durch Hydroxy, Phenoxy, Formyloxy oder Acetyloxy substituiert ist, bedeuten.

5. Verwendung der Benzisothiazolazofarbstoffe gemäß Anspruch 1 zum Färben von textilen Fasern.

Europäisches Patentamt

# EUROPÄISCHER RECHERCHENBERICHT

Nummer der Anmeldung

EP 90109648.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.5) |
|---|---|---|---|
| D,X | EP - A1 - 0 084 150 (BASF AKTIENGESELLSCHAFT) * Ansprüche 1,6 * | 1,2,4, 5 | C 09 B 29/042<br>C 09 B 29/36<br>C 09 B 29/42<br>D 06 P 1/04 |
| X | DE - A1 - 2 738 885 (BASF AG) * Ansprüche 1,2,4; Seite 3, Zeile 6 von unten - Seite 4, letzte Zeile * | 1-3,5 | |
| A | DE - A1 - 3 405 141 (BASF AG) * Ansprüche 1,3 * | 1-5 | |
| A | EP - A1 - 135 131 (BASF AKTIENGESELLSCHAFT) * Ansprüche 1,9 * | 1-5 | |
| | | | RECHERCHIERTE SACHGEBIETE (Int Cl.5) |
| | | | C 09 B<br>D 06 P |

Der vorliegende Recherchenbericht wurde für alle Patentansprüche erstellt.

| Recherchenort | Abschlußdatum der Recherche | Prüfer |
|---|---|---|
| WIEN | 07-09-1990 | HAUSWIRTH |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82